# EUROPEAN PATENT APPLICATION

(11) **EP 4 481 715 A1**
(43) Date of publication of application: **25.12.2024**
(21) Application number: 24183186.6
(22) Date of filing: 19.06.2024
(51) Int. Cl.: G09B 23/28

(54) **DENTIFORM FOR PRACTICING DENTAL PROCEDURES**

(30) Priority: 21.06.2023 KR 20230079994
(71) Applicant: B&L Biotech, Inc., Ansan-si, Gyeonggi-do 15462 (KR); Lee, In Whan, Seoul 06372 (KR)
(72) Inventor: LEE, In Whan, 06372 Seoul (KR)
(74) Representative: Klunker IP Patentanwälte PartG mbB

(57) **Abstract**

According to one aspect of the present disclosure, the present disclosure may provide a dentiform for practicing dental procedures. According to the present disclosure, the dentiform includes an upper jaw and a lower jaw that are detachably joined, and the dentiform includes individual teeth forming tooth heads and tooth roots, wherein, on the outer surface of the tooth root, coupling guide projections are formed to prevent separation when combined with tooth-fixing blocks and to guide the coupling direction, and a dental nerve is formed inside the tooth root; tooth-fixing blocks in which an internal space where the tooth roots of the individual teeth are detachably joined is formed, wherein the internal space is filled with conductive gel for root canal measurement; a gum portion where the tooth-fixing blocks are assembled according to tooth arrangement; and a chin support to which the gum portion and the tooth-fixing blocks are fixed, wherein the chin support is coupled to a temporomandibular joint of an upper jaw or a lower jaw.

## Description

### CROSS-REFERENCE TO RELATED APPLICATION

This application claims priority to Korean Patent Application No. 10-2023-0079994, filed on June 21, 2023, in the Korean Intellectual Property Office, the disclosure of which is incorporated herein by reference

### BACKGROUND OF THE DISCLOSURE

### Field of the Disclosure

The present disclosure relates to a dentiform for practicing dental procedures, and more particularly, to a dentiform for practicing dental procedures that forms a dental nerve in the same shape as the actual dental nerve inside a tooth root, allowing a user to master nerve treatment skills such as identification of a dental nerve structure and dental nerve removal surgery through practice.

### Description of the Related Art

Generally, dental nerve treatment is performed when cavities extend beyond the dentin of the tooth base body (crown) and invade the dental nerve (pulp space and root canal), causing pain. When nerve treatment diagnosis is confirmed for a tooth and dental nerve treatment is performed, a hole is made in the tooth base body using a drill tool for dental procedures, the tooth tissue and blood vessels of the dental nerve are removed using an electric nerve removal tool, the root canal cavity is disinfected, and the root canal cavity and hole are filled with an alternative material. That is, dental nerve treatment is a type of prosthetic treatment.

Dental nerve treatment requires complete removal of the dental nerve while minimizing damage to the dentin of the tooth to prevent recurrence of pain and preserve natural teeth as much as possible. Accordingly, multiple practices are required to learn nerve treatment techniques.

General dentiforms are used for prosthetic restoration, and caries and nerve treatment models are classified as special teeth and can be used for nerve treatment. Currently, in general dental schools, practical training is conducted using tooth models for nerve treatment and caries treatment practice.

However, the tooth models used previously for practice are structurally different from real teeth. In addition, due to limitations in materials, the tooth models have limitations in practice compared to extracted teeth. In addition, in the case of teeth for practice, the lower end thereof is blunt and is fixed with a screw, or even when the root is formed, the root is filled with plaster or resin and fixed, which limits practice.

In particular, in the case of teeth for nerve treatment practice with roots, because of the shape of the roots, the teeth are difficult to fix in a normal dentiform, so plaster or syringe resin is used to fix the teeth. In this case, after practice, the plaster or resin must be removed to separate the teeth again, so fixing or separating the teeth is cumbersome and difficult.

In addition, a method of flattening the roots of teeth and fixing the teeth to a general dentiform with screws is also used. The teeth are not identical to real teeth, so there are limitations in practice.

### [Related Art Documents]

### [Patent Documents]

(Patent Document 1) Korean Patent No. 10-1714667

### SUMMARY OF THE DISCLOSURE

Therefore, the present disclosure has been made in view of the above problems, and it is an object of the present disclosure to provide a dentiform for practicing dental procedures that enables identification of a dental nerve structure through practice and allows mastery of nerve treatment skills such as dental nerve removal surgery by forming an individual tooth consisting of a tooth head and a tooth root, forming coupling guide projections on the outer surface of the tooth root to prevent separation when coupled with tooth-fixing blocks and to guide a coupling direction, and forming a dental nerve in the same shape as an real dental nerve inside the tooth root.

It is another object of the present disclosure to provide a dentiform for practicing dental procedures that uses tooth-fixing blocks to stably fix individual teeth with formed tooth roots without shaking according to tooth arrangement and is easy to use and enables recycling of remaining accessories by separating, from the fixing block, only individual teeth that need to be replaced after practice and replacing the individual teeth.

It is yet another object of the present disclosure to provide a dentiform for practicing dental procedures that is capable of measuring the root canal of individual teeth in nerve treatment practice.

In accordance with one aspect of the present disclosure, provided is a dentiform for practicing dental procedures including individual teeth forming tooth heads and tooth roots; tooth-fixing blocks to which the tooth roots of the individual teeth are detachably coupled; and a chin support to which the tooth-fixing blocks are fixed, wherein the chin support is coupled to a temporomandibular joint of an upper jaw or a lower jaw.

In accordance with another aspect of the present disclosure, provided is a dentiform for practicing dental procedures including individual teeth forming tooth heads and tooth roots; tooth-fixing blocks to which the tooth roots of the individual teeth are detachably coupled; a gum portion where the tooth-fixing blocks are assembled according to tooth arrangement; and a chin support to which the gum portion and the tooth-fixing blocks are fixed, wherein the chin support is coupled to a temporomandibular joint of an upper jaw or a lower jaw.

Here, on outer surfaces of the tooth roots of the individual teeth, coupling guide projections may be formed to prevent separation when coupled to the tooth-fixing blocks and to guide a coupling direction.

In addition, an internal space may be formed inside the tooth-fixing block, and an extra space may be formed between the tooth root and an inner surface of the internal space.

In addition, the internal space of the tooth-fixing block may be filled with conductive gel for root canal measurement.

In addition, the tooth-fixing block may consist of a first half body assembled on an outside of a dentition and a second half body assembled on an inside of the dentition with individual teeth therebetween, the first half body and the second half body may form an internal space filled with the conductive gel, teeth fixing holes that surround and secure outer surfaces of the individual teeth may be formed at an upper edge of the internal space, and protrusion coupling portions may be formed at upper and lower edges of the internal space to allow male and female coupling between the first half body and the second half body.

At this time, on an inside of the teeth fixing holes, coupling guide grooves into which the coupling guide projections formed on the individual teeth are aligned may be formed.

In addition, a planar shape of the tooth-fixing block may be formed into a fan shape with an angle gradually widening from an inner direction to an outer direction of the dentition.

In addition, a mounting protrusion that is fitted into the gum portion may be further formed on a lower inner surface of the second half body.

In addition, the gum portion may consist of a gum body having a "U"-shaped curvature according to tooth arrangement, a bottom portion connecting an inner space of the gum body, and a block assembly guide groove that guides the tooth-fixing blocks to be assembled according to the tooth arrangement of the gum body.

At this time, a mounting groove that engages the mounting protrusion of the tooth-fixing block may be formed on an inner edge of the block assembly guide groove.

In addition, the chin support may consist of an edge body forming an outline identical to that of the gum portion, an accommodation space formed to accommodate the gum portion in an inner space of the edge body, and a bottom body that forms a bottom of the edge body.

At this time, on the bottom body, a lower portion of the tooth-fixing block and a lower portion of the mounting protrusion may be aligned to form a dentition guide groove that maintains dentition.

In addition, a plurality of fastening holes may be formed in the bottom body of the chin support, and bolts may be fastened in a vertical direction from an outside to an inside of the bottom body through the fastening holes to ensure that the gum portion and the tooth-fixing blocks are fixed to the chin support.

In addition, by fastening locking pins in a horizontal direction from an outside to an inside of the gum portion, the gum portion and the tooth-fixing blocks may be sequentially penetrated and fixed with the locking pins. In this case, one locking pin may be fastened to each of the tooth-fixing blocks.

In addition, at a bottom of the tooth-fixing blocks, a support means may be formed to continuously engage and support neighboring tooth-fixing blocks. In this case, the support means may consist of support feet extending to one side of the bottom of the tooth-fixing blocks to support the lower portion of the neighboring tooth-fixing blocks and support feet insertion grooves that allow insertion of the support feet by recessing the bottom where the support feet contact.

At this time, among the tooth-fixing blocks, each tooth-fixing block located at both ends of the dentition may form only the support feet extending toward the center of the dentition, and the tooth-fixing blocks located in a center of the dentition may form only the support feet insertion grooves on both left and right sides, so that the entire tooth-fixing blocks are supported in series when a pair of tooth-fixing blocks located at both ends of the dentition are fixed to the gum portion using locking pins.

In addition, in the gum portion, the gum body and the bottom portion may be separately formed along the block assembly guide groove, support protrusions may be formed on an outer edge of the block assembly guide groove formed on the gum body to prevent a lower surface of the tooth-fixing blocks from sagging, the mounting grooves that engage the mounting protrusion of the tooth-fixing blocks may be formed on an inner edge of the block assembly guide groove formed in the bottom portion, and the tooth-fixing blocks may be fixed to prevent the tooth-fixing blocks from moving up and down when the bottom portion and the gum body are combined.

At this time, the bottom portion may be fastened with bolts to the bottom body of the chin support.

In addition, a root canal measurement hole that laterally penetrates the chin support, the gum portion, and the tooth-fixing blocks may be formed, and root canal measurement may be performed by inserting a measurement stick into an internal space of the tooth-fixing blocks through the root canal measurement hole.

At this time, the root canal measurement hole and the measurement stick may be formed so that one tooth-fixing block is combined to one root canal measurement hole and one measurement stick.

In addition, a conductor may be installed to penetrate a bottom of the tooth-fixing block, and the chin support, the conductive gel of the internal space of the tooth-fixing block, and the individual teeth may be electrically connected through the conductor.

In addition, a root canal measurement hole that laterally penetrates the gum portion and the tooth-fixing blocks may be formed, and root canal measurement may be performed by inserting a measurement stick into an internal space of the tooth-fixing blocks through the root canal measurement hole.

At this time, the root canal measurement hole and the measurement stick may be formed so that one tooth-fixing block is combined to one root canal measurement hole and one measurement stick.

In addition, in the individual teeth, a dental nerve may be formed inside the tooth root.

In addition, the individual tooth may form a tooth head and a tooth root, the tooth head may form a dentin layer made of a relatively weak material, and a crown layer made of a relatively strong material may be formed outside the dentin layer to surround the dentin layer.

In addition, the gum portion may be made of silicone or plastic resin.

In addition, dentiforms may each be coupled to temporomandibular joint portions to form an upper jaw and a lower jaw that operate to open or close in a vertical direction.

In accordance with yet another aspect of the present disclosure, provided is a dentiform for practicing dental procedures including tooth-fixing blocks to which tooth roots of individual teeth are detachably coupled; and a gum portion where the tooth-fixing blocks are assembled according to tooth arrangement,
wherein the tooth-fixing block consists of a first half body assembled on an outside of a dentition and a second half body assembled on an inside of the dentition with individual teeth therebetween, and the first half body and the second half body include an internal space filled with conductive gel;
the gum portion includes a gum body having a "U"-shaped curvature according to tooth arrangement, a bottom portion connecting an inner space of the gum body, and a block assembly guide groove penetrated along a "U"-shaped curvature so that the tooth-fixing blocks are assembled according to tooth arrangement;
hooks that protrude outward are formed on each of the first half body and the second half body of the tooth-fixing block; and
a detachable groove into which the hooks are attached and detachable is formed in the block assembly guide groove of the gum portion.

Here, the hooks and the detachable groove may form a linear structure extending in a transverse direction.

In addition, the hooks may be formed in a lower portion of the first half body and the second half body, extension wings that extend to a lower portion of the hooks and operate to link elastic deformation of the hooks may be formed integrally, and separation spaces may be formed inside the extension wings so that deformation in the extension wings and the hooks is accommodated.

In addition, a mounting protrusion that is fitted to the gum portion may be further formed on a lower inner surface of the second half body, and a mounting groove that engage the mounting protrusion may be formed on an inner edge of the block assembly guide groove.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view showing an example of coupling a dentiform for practicing dental procedures according to one embodiment of the present disclosure to temporomandibular joint portions;
FIG. 2 is an exploded perspective view showing a dentiform according to one embodiment of the present disclosure;
FIGS. 3A and 3B are assembly perspective views of tooth-fixing blocks and individual teeth according to one embodiment of the present disclosure;
FIGS. 4A and 4B are exploded perspective views of tooth-fixing blocks and individual teeth according to one embodiment of the present disclosure;
FIG. 5 is a perspective view of an individual tooth according to one embodiment of the present disclosure;
FIG. 6 is a perspective view showing tooth-fixing blocks being combined according to the dentition of a gum portion according to one embodiment of the present disclosure;
FIG. 7 is a bottom perspective view showing the structure of tooth-fixing blocks according to one embodiment of the present disclosure;
FIG. 8 is a bottom exploded perspective view showing the structure of the tooth-fixing blocks of a dentiform for practicing dental procedures according to another embodiment of the present disclosure;
FIG. 9 is a bottom assembly perspective view showing the structure of the tooth-fixing blocks of a dentiform for practicing dental procedures according to another embodiment of the present disclosure;
FIGS. 10 to 13 are diagrams showing the dental processing block structure of a dentiform for practicing dental procedures according to another embodiment of the present disclosure;
FIG. 14 shows an example explaining the root canal measurement structure of individual teeth according to the present disclosure;
FIG. 15 shows another example explaining the root canal measurement structure of individual teeth according to the present disclosure;
FIGS. 16 and 17 are another examples explaining the root canal measurement structure of individual teeth according to the present disclosure;
FIG. 18 is an assembly cross-section of the structure of tooth-fixing blocks according to another embodiment of the present disclosure;
FIG. 19 is a perspective view showing the structure of the tooth-fixing blocks of FIG. 18;
FIG. 20 is a perspective view showing the structure of the gum portion of FIG. 18;
FIG. 21 is a perspective view showing the individual tooth-fixing block of FIG. 18;
FIG. 22 is a partially enlarged diagram showing the hook structure of FIG. 21;
FIG. 23 is a perspective view showing the assembled state of the tooth-fixing blocks and gum portion of FIG. 18; and
FIG. 24 is a bottom perspective view showing the assembled state of the tooth-fixing blocks and gum portion of FIG. 18.

### DETAILED DESCRIPTION OF THE DISCLOSURE

Hereinafter, with reference to the attached drawings, a detailed description of a dentiform for practicing dental procedures according to a preferred embodiment is as follows. Here, the same symbols are used for the same components. Repetitive descriptions and detailed descriptions of known functions and configurations that may unnecessarily obscure the gist of the invention are omitted. Embodiments of the invention are provided to more fully explain the present disclosure to those of average skill in the art. Accordingly, the shapes and sizes of elements in the drawings may be exaggerated for clearer explanation.

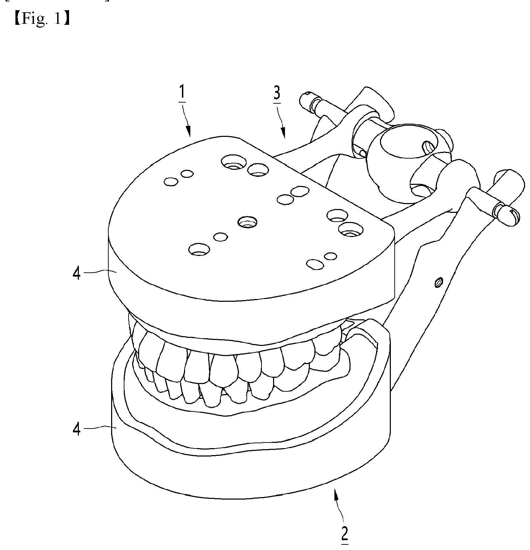

FIG. 1 is a perspective view showing an example of coupling a dentiform for practicing dental procedures according to one embodiment of the present disclosure to temporomandibular j oint portions. Referring to FIG. 1, dentiforms 4 for practicing dental procedures according to the present disclosure may each be coupled to temporomandibular joint portions 3 to form an upper jaw 1 and a lower jaw 2 that operate to open or close in the vertical direction.

At this time, the temporomandibular joint portions 3 improve practice efficiency by providing an operating structure similar to the temporomandibular joints of the human body.

In addition, the dentiforms 4, which form the upper jaw 1 and the lower jaw 2, are formed in the same structure, except that the shapes of the upper jaw teeth and the shapes of the lower jaw teeth are different.

Hereinafter, for convenience of explanation, the configuration of the dentiforms 4 forming the upper jaw 1 and the lower jaw 2 will be denoted with the same name and symbol.

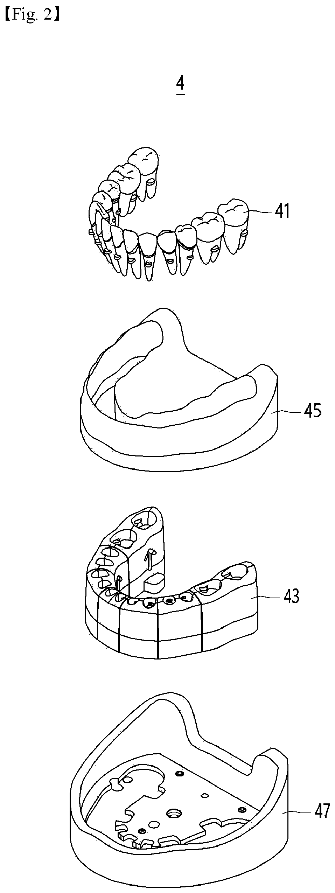

The dentiforms 4 will be described in detail with reference to FIGS. 2 to 7.

FIG. 2 is an exploded perspective view showing a dentiform according to one embodiment of the present disclosure. Referring to FIG. 2, the dentiform 4 of the present disclosure is largely composed of individual teeth 41, tooth-fixing blocks 43, a gum portion 45, and a chin support 47.

The individual teeth 41, the tooth-fixing blocks 43, the gum portion 45, and the chin support 47 are formed according to the tooth arrangement of the human body. At this time, the individual teeth 41 are joined to the tooth-fixing blocks 43 in units of 1 or 2 to prevent separation. The tooth-fixing blocks 43 are coupled to the gum portion 45, and the gum portion 45 is coupled to the chin support 47 to prevent the tooth-fixing blocks 43 from being separated.

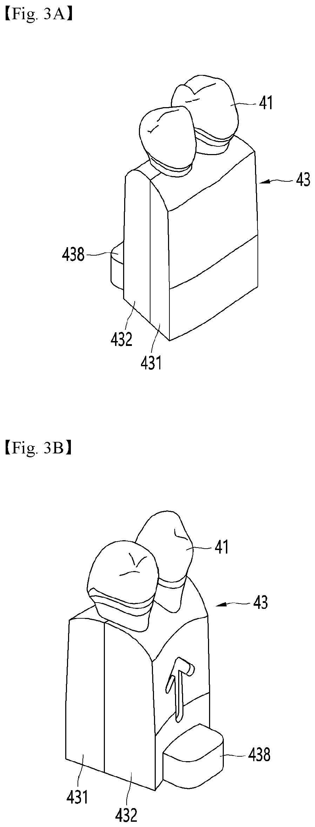

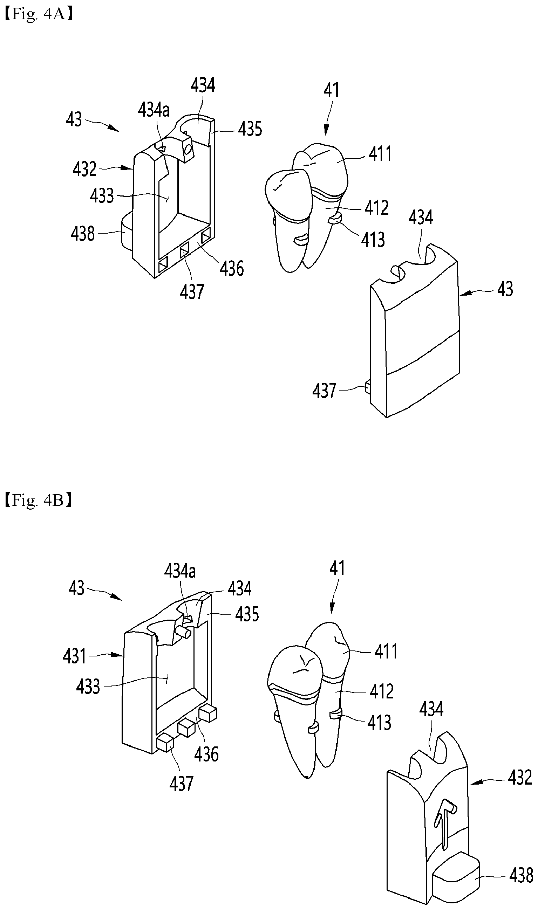

FIGS. 3 and 4 show a configuration in which two of the individual teeth 41 are connected to the tooth-fixing block 43. However, the number of the individual teeth 41 coupled to one tooth-fixing block 43 is not limited thereto, and one or more individual teeth may be coupled to one tooth-fixing block 43.

Hereinafter, individual teeth and the tooth-fixing blocks 43 will be described.

FIGS. 3A and 3B are assembly perspective views of tooth-fixing blocks and individual teeth according to one embodiment of the present disclosure. FIGS. 4A and 4B are exploded perspective views of tooth-fixing blocks and individual teeth according to one embodiment of the present disclosure.

As shown in FIGS. 3A to 4B, in the tooth-fixing block 43, an internal space 433 to which the tooth roots of the individual teeth 41 are removably coupled is formed, and the internal space 433 is provided with a case structure filled with conductive gel for root canal measurement.

The tooth-fixing block 43 consists of a first half body 431 assembled on the outside of the dentition and a second half body 432 assembled on the inside of the dentition. At this time, the individual teeth 41 are disposed between the first half body 431 and the second half body 432.

The first half body 431 and the second half body 432 each have an open surface and an enclosed interior. The opening of the first half body 431 and the opening of the second half body 432 are combined to form the internal space 433. At this time, the internal space 433 is filled with conductive gel and provides a space where the tooth roots 412 of the individual teeth 41 are accommodated.

At this time, in the first half body 431 and the second half body 432, teeth fixing holes 434 are formed in an upper edge 435 of the internal space 433 to surround and secure the outer surface of the individual teeth 41.

The teeth fixing holes 434 are formed in the first half body 431 and the second half body 432 in a split manner, and may be molded to adhere closely to the outline of the individual teeth 41. At this time, the teeth fixing holes 434 may be molded into a tapered shape that is wide at the top and narrow at the bottom.

For example, the tooth-fixing blocks 43 may be made of a synthetic resin material that is easy to mold.

At this time, a male and female coupling structure that is easy to disassemble and assemble may be provided between the first half body 431 and the second half body 432. For this configuration, protrusion coupling portions 437 having a male and female coupling structure may be formed in the first half body 431 and the second half body 432.

At this time, the protrusion coupling portions 437 may be formed at the open edge of the internal space 433.

As shown in FIGS. 4A and 4B, among the peripheral edges of the internal space 433, the upper edge 435 and lower edge 436 may be formed wider. The protrusion coupling portions 437 may be formed at the upper edge 435 and the lower edge 436, which provide a large area.

At this time, the protrusion coupling portions 437 may be formed so that a pillar-shaped protrusions are formed on one edge surface of the first half body 431 or the second half body 432, and protrusion grooves into which the protrusions are inserted are formed on the opposite edge surface. At this time, the diameter of the protrusion grooves may be formed smaller than the diameter of the protrusions to ensure mutual interference fit.

The protrusions of the protrusion coupling portions 437 may be manufactured in the form of a cylinder or square pillar, and the protrusion grooves may be formed as circular grooves or square grooves.

At this time, coupling guide grooves 434a may be formed in the teeth fixing holes 434 to fix the individual teeth 41 in accordance with the dentition.

The coupling guide grooves 434a may be formed on the inner surfaces of the teeth fixing holes 434, and coupling guide projections 413 that match the coupling guide grooves 434a may be formed on the individual teeth 41.

The planar shape of the tooth-fixing block 43 may be formed into a fan shape with an angle gradually widening from the inner direction to the outer direction of the dentition. The tooth-fixing block 43 consists of the first half body 431 assembled on the outside of the dentition and the second half body 432 assembled on the inside of the dentition, and the individual teeth 41 are located between the first half body 431 and the second half body 432.

That is, the tooth-fixing block 43 is manufactured in a fan shape that gradually widens from the second half body 432 to the first half body 431.

At this time, a mounting protrusion 438 may be formed to protrude from the lower inner surface of the second half body 432. At this time, the mounting protrusion 438 is fitted and coupled to the gum portion 45 to be described later. The mounting protrusion 438 is pressed in contact with the lower part of the gum portion 45, thereby fixing the movement of the tooth-fixing blocks 43 between the chin support 47 and preventing separation.

At this time, the appearance and internal structure of the tooth-fixing block 43 may change depending on the number of the individual teeth 41 that are combined to the tooth-fixing block 43.

For example, FIGS. 3 and 4 show an example of combining two individual teeth 41 as one set, and shows an example of forming, as one set, two teeth fixing holes 434 that surround and secure the outer surface of the individual teeth 41 to the upper edge 435 of the first half body 431 and the second half body 432 of the tooth-fixing block 43.

However, the number of the teeth fixing holes 434 may be one or more depending on the number of the individual teeth 41 that are combined.

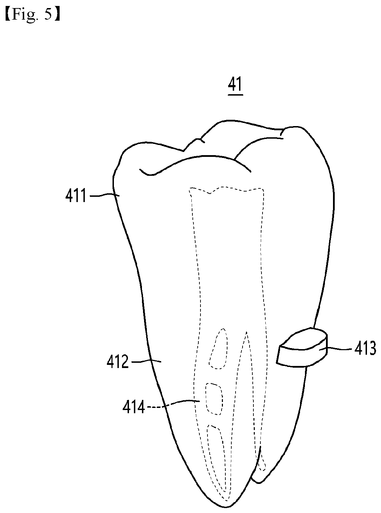

FIG. 5 is a perspective view of an individual tooth according to one embodiment of the present disclosure.

Referring to FIG. 5, the individual tooth 41 consists of a tooth head 411 and a tooth root 412. At this time, the tooth root 412 is wide on the tooth head side and gradually becomes sharper toward the bottom. On the outer surface of the tooth root 412, the coupling guide projections 413 are formed to prevent separation when coupled to the tooth-fixing block 43 and to guide the coupling direction.

At this time, one coupling guide projection 413 may be formed at the front and rear of the individual tooth 41.

In addition, in the individual tooth 41, a dental nerve 414 may be formed inside the tooth root 412. At this time, the individual tooth 41 may be freely modified according to the shape of the tooth head 411 and the tooth root 412, such as molars or front teeth. In particular, the tooth root 412 may be freely deformed within the range permitted by the internal space 433 of the tooth-fixing block 43.

By manufacturing the dental nerve 414 with the same shape and texture as the nerves of real teeth in the human body, practitioners may perform nerve treatment practices such as nerve structure identification and nerve removal under realistic conditions.

In addition, the individual tooth 41 forms the tooth head 411 and the tooth root 412, the tooth head 411 forms a dentin layer made of a relatively weak material, and a crown layer made of a relatively strong material is formed outside the dentin layer to surround the dentin layer. Through this configuration, a feeling similar to real teeth may be provided.

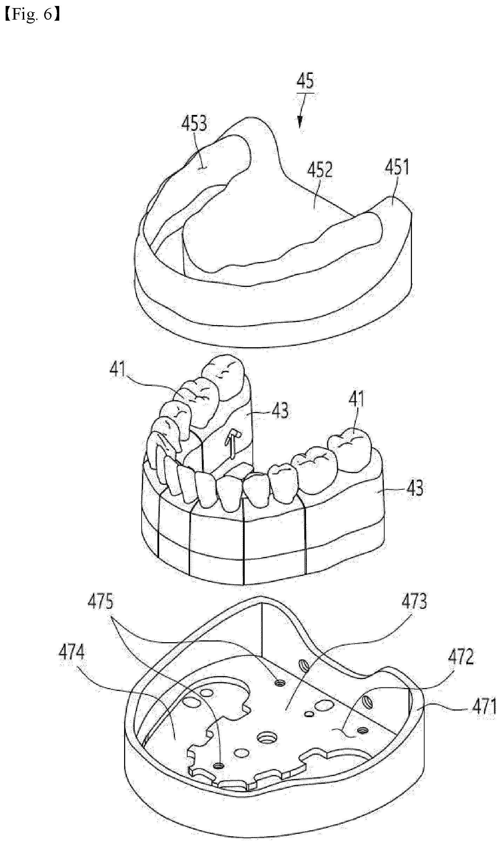

FIG. 6 is a perspective view showing tooth-fixing blocks being combined according to the dentition of a gum portion according to one embodiment of the present disclosure.

As shown in FIG. 6, the tooth-fixing blocks 43 to which one or two individual teeth 41 are combined are arranged according to the dentition and assembled according to the tooth arrangement of the gum portion 45. At this time, the size or shape of the tooth-fixing blocks 43 may vary depending on the shape of the individual teeth 41 to which the tooth-fixing blocks 43 are coupled, but the names and symbols for detailed components having the same function and structure are all used the same.

In addition, the gum portion 45 includes a gum body 451 having a "U"-shaped curvature according to tooth arrangement, a bottom portion 452 connecting the inner space of the gum body 451, and a block assembly guide groove 453 that guides the tooth-fixing blocks 43 to be assembled according to the tooth arrangement of the gum body 451.

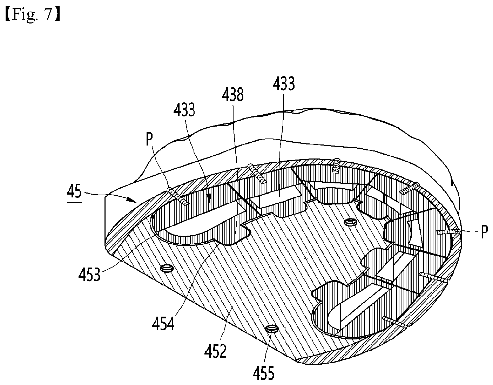

At this time, the block assembly guide groove 453 forms a through groove with a "U"-shaped curvature. Mounting grooves 454 (see FIG. 7) that engage the mounting protrusion 438 of the tooth-fixing block may be formed on the inner edge of the block assembly guide groove 453.

At this time, the gum portion 45 may be manufactured by molding a synthetic resin material.

Next, the gum portion 45 and the tooth-fixing blocks 43 are fixed to the chin support 47.

The chin support 47 may be made of a metal and serves as a base structure for connecting the dentiforms 4 to the temporomandibular j oint portions 3 of the upper jaw 1 or the lower jaw 2.

The chin support 47 may include an edge body 471 that forms the same outline as that of the gum portion 45, an accommodation space 472 formed to accommodate the gum portion 45 in the inner space of the edge body 471, and a bottom body 473 that forms the bottom of the edge body 471.

At this time, the edge body 471 is formed so that the upper portion of the gum portion 45 protrudes, and a dentition guide groove 474 may be formed in the bottom body 473 to align the lower portions of the tooth-fixing blocks 43 and the lower portion of the mounting protrusion 438 to maintain dentition.

At this time, the dentition guide groove 474 may be manufactured in the form of a stepped groove with a "U"-shaped curvature similar to the shape of the block assembly guide groove 453 of the gum portion 45.

At this time, a plurality of fastening holes 475 may be formed on the bottom body 473 of the chin support 47.

At this time, female threads capable of screw fastening may be formed in the fastening holes 475. The gum portion 45 and the tooth-fixing blocks 43 may be fixed to the chin support 47 by fastening bolts (not shown) in a vertical direction from the outside of the bottom body 473 to the inside through the fastening holes 475.

The gum portion may be manufactured using either silicone or plastic resin, which is a material that has the texture of gums.

FIG. 7 is a bottom perspective view showing the structure of tooth-fixing blocks according to one embodiment of the present disclosure.

Referring to FIG. 7, by fastening locking pins (P) in the horizontal direction from the outside to the inside of the gum body 451 of the gum portion 45, the locking pins (P) sequentially penetrate and are fixed through the gum portion 45 and the tooth-fixing blocks 43. At this time, one locking pin (P) may be fastened to each of the tooth-fixing blocks 43.

At this time, the locking pins (P) do not penetrate into the internal space 433 of the tooth-fixing blocks 43, but are fastened to be inserted into the bottom body of the tooth-fixing blocks 43.

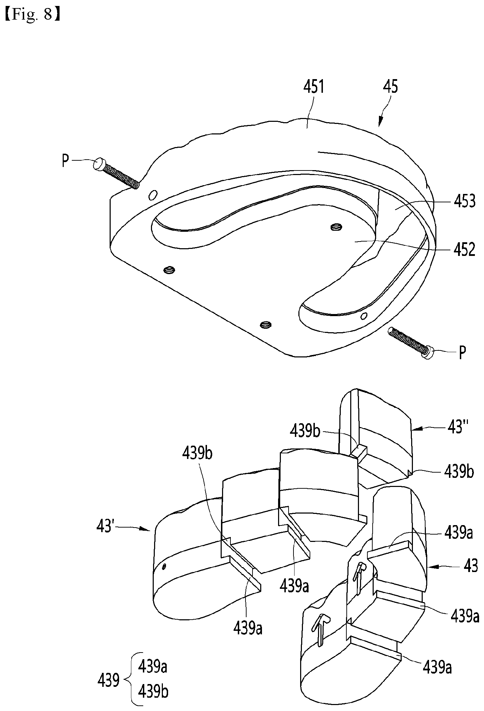

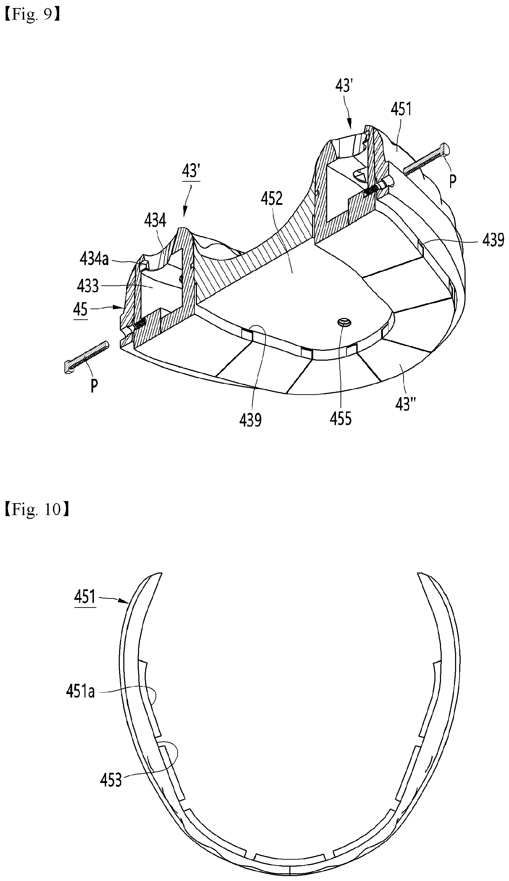

FIG. 8 is a bottom exploded perspective view showing the structure of the tooth-fixing blocks of a dentiform for practicing dental procedures according to another embodiment of the present disclosure. FIG. 9 is a bottom assembly perspective view of the structure of the tooth-fixing blocks of a dentiform for practicing dental procedures according to another embodiment of the present disclosure.

Referring to FIGS. 8 and 9, support means 439 may be formed at the bottom of the tooth-fixing blocks 43 to continuously engage and support the neighboring tooth-fixing blocks 43.

At this time, the support means 439 may consist of support feet 439a extending to one side of the bottom of the tooth-fixing blocks 43 to support the lower portions of the neighboring tooth-fixing blocks 43 and support feet insertion grooves 439b that are formed by recessing the bottom in contact with the support feet 439a and allow the support feet 439a to be inserted.

At this time, among the tooth-fixing blocks 43, each tooth-fixing block 43 located at both ends of the dentition forms only the support feet 439a extending toward the center of the dentition, and the tooth-fixing blocks 43, located in the center of the dentition, form only the support feet insertion grooves 439b on both left and right sides. With this configuration, when a pair of tooth-fixing blocks 43 located at both ends of the dentition are fixed to the gum portion 45 using the locking pins (P), the entire tooth-fixing blocks 43 may be supported in series.

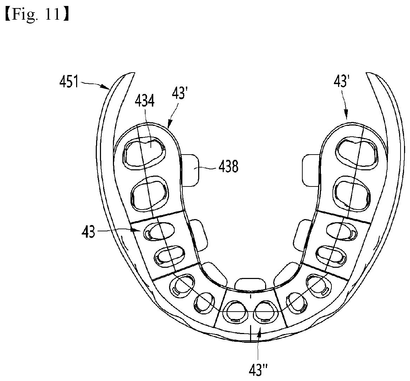

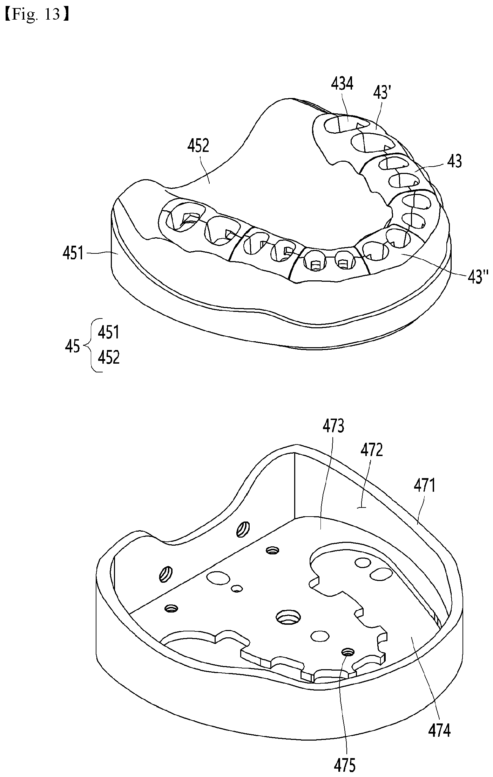

FIGS. 10 to 13 are diagrams showing the dental processing block structure of a dentiform for practicing dental procedures according to another embodiment of the present disclosure.

Referring to FIGS. 10 to 13, in the gum portion 45, the gum body 451 and the bottom portion 452 may be separately formed along the block assembly guide groove 453.

At this time, as shown in FIG. 10, support protrusions 451a may be formed on the outer edge of the block assembly guide groove 453 formed on the gum body 451 to prevent the lower surface of the tooth-fixing blocks 43 from sagging.

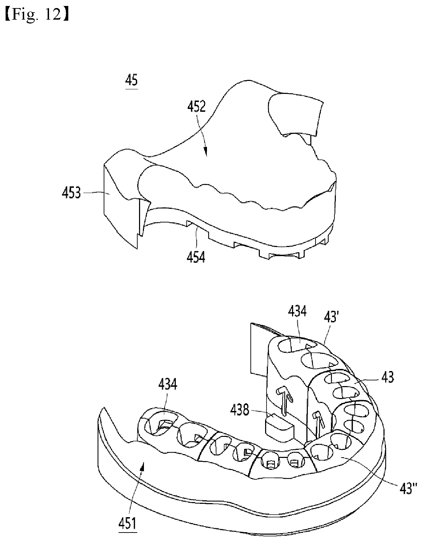

In addition, as shown in FIG. 12, the mounting grooves 454 that engage the mounting protrusion 438 of the tooth-fixing blocks may be formed on the inner edge of the block assembly guide groove 453 formed in the bottom portion 452.

When the bottom portion 452 and the gum body 451 are combined, the support protrusions 451a support one lower surface of the tooth-fixing blocks 43, and the mounting grooves 454 press against and support the mounting protrusion 438 on the other side of the tooth-fixing blocks 43. With this configuration, the tooth-fixing blocks 43 may be prevented from moving up and down by the coupling structure of the gum portion 45.

At this time, the bottom portion 452 of the gum portion 45 may be fastened to the bottom body 473 of the chin support 47 with bolts.

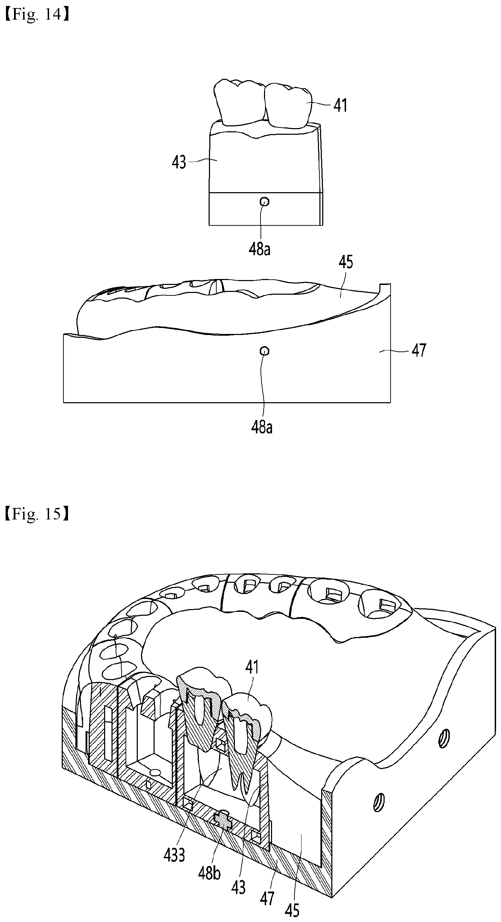

FIG. 14 shows an example explaining the root canal measurement structure of individual teeth according to the present disclosure.

Referring to FIG. 14, a root canal measurement hole 48a may be formed to laterally penetrate the chin support 47, the gum portion 45, and the tooth-fixing blocks 43, and root canal measurement may be performed by inserting a measurement stick 48c into the internal space 433 of the tooth-fixing blocks 43 through the root canal measurement hole 48a.

Here, root canal measurement means measuring the length from the top of the tooth to the tip of the root, and a root canal measuring device is used for such root canal measurement. Most electronic root canal measuring devices use the fact that human tissue is composed of components with electrical properties. Electronic root canal measuring devices detect the exact end of the root canal by measuring differences in electrical characteristics such as resistance or impedance.

At this time, the root canal measurement hole 48a and the measurement stick 48c may be formed by combining the tooth-fixing blocks 43 one by one.

FIG. 15 shows another example explaining the root canal measurement structure of individual teeth according to the present disclosure.

Referring to FIG. 15, a conductor 48b is installed to penetrate the bottom of the tooth-fixing block 43, and the chin support 47, the conductive gel of the internal space 433 of the tooth-fixing block 43, and the individual teeth 41 are electrically connected through the conductor 48b.

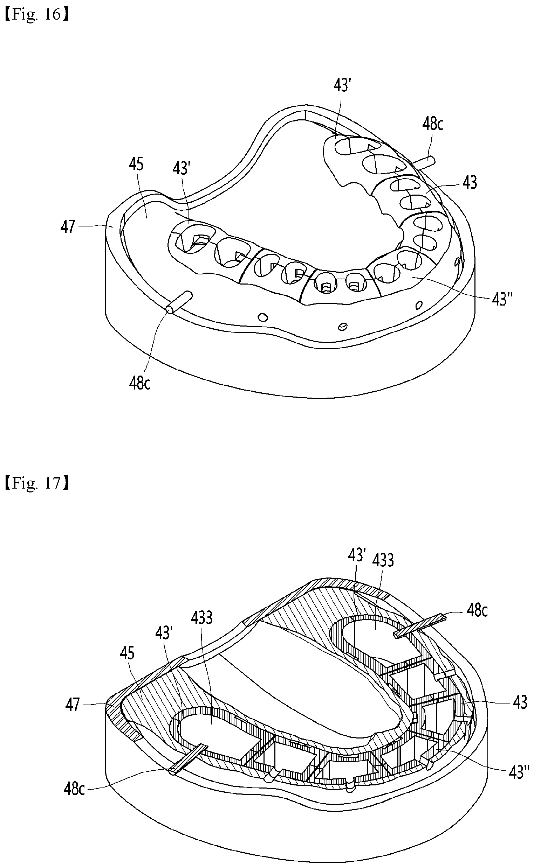

FIGS. 16 and 17 are another examples explaining the root canal measurement structure of individual teeth according to the present disclosure.

Referring to FIGS. 16 and 17, the root canal measurement hole 48a, which laterally penetrates the gum portion 45 and the tooth-fixing blocks 43, may be formed. Root canal measurement may be performed by inserting the measurement stick 48c into the internal space 433 of the tooth-fixing blocks 43 through the root canal measurement hole 48a.

At this time, the root canal measurement hole 48a and the measurement stick 48c may be formed one by one for each tooth-fixing block 43.

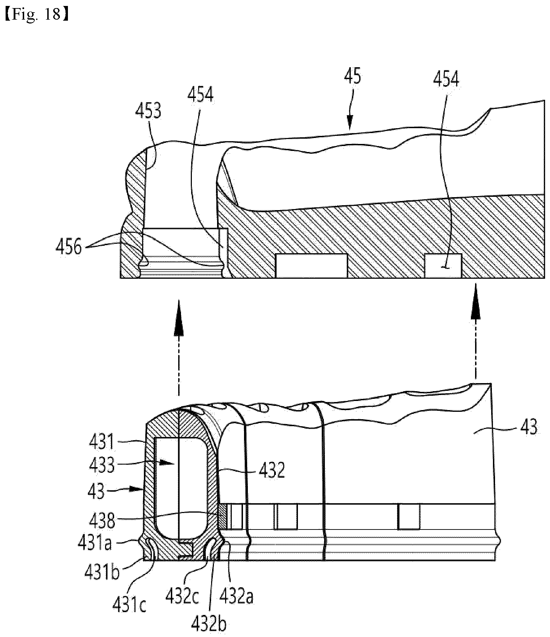

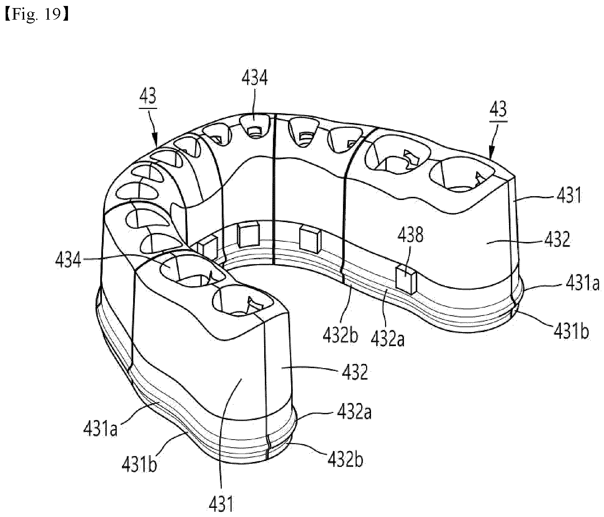

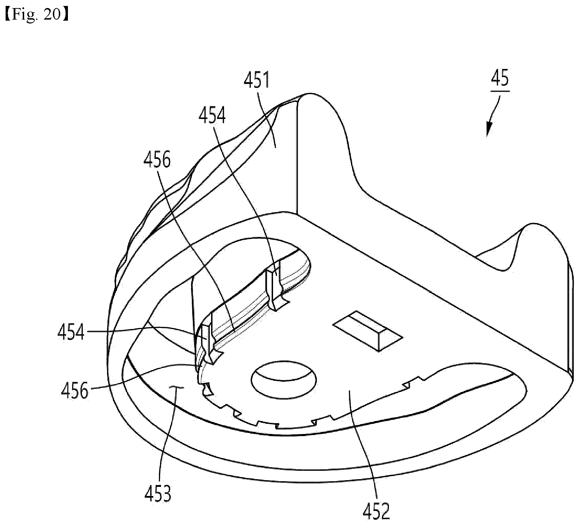

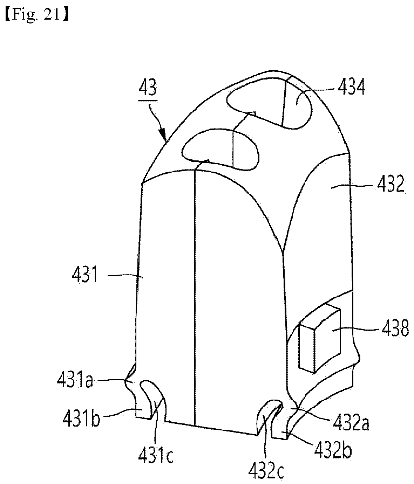

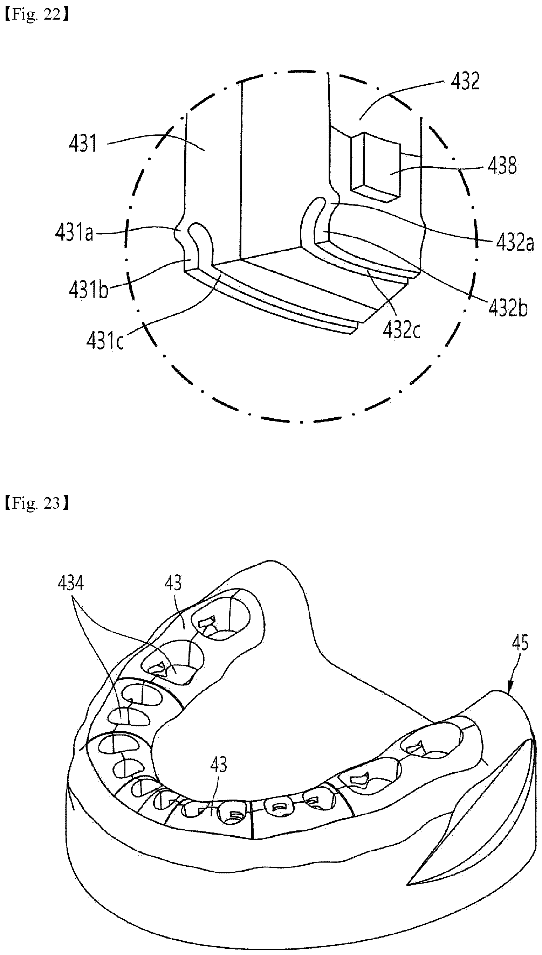

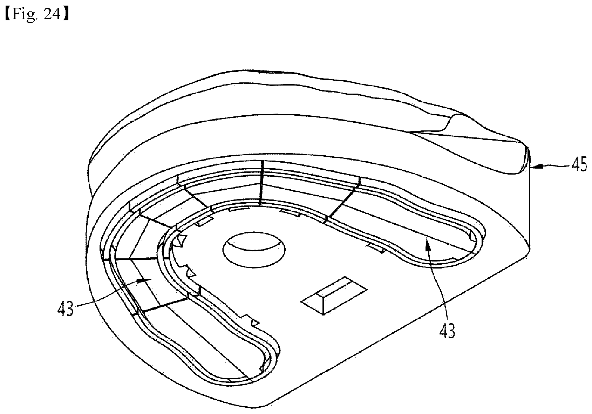

FIG. 18 is an assembly cross-section of the structure of tooth-fixing blocks according to another embodiment of the present disclosure. FIG. 19 is a perspective view showing the structure of the tooth-fixing blocks of FIG. 18. FIG. 20 is a perspective view showing the structure of the gum portion of FIG. 18. FIG. 21 is a perspective view showing the individual tooth-fixing block of FIG. 18. FIG. 22 is a partially enlarged diagram showing the hook structure of FIG. 21. FIG. 23 is a perspective view showing the assembled state of the tooth-fixing blocks and gum portion of FIG. 18. FIG. 24 is a bottom perspective view showing the assembled state of the tooth-fixing blocks and gum portion of FIG. 18.

Referring to FIGS. 18 to 24, the tooth-fixing blocks 43 and the gum portion 45 are provided as a detachable structure using a hook structure.

In the present disclosure, the tooth-fixing blocks 43, to which the tooth roots of individual teeth are removably coupled, and the gum portion 45, in which the tooth-fixing blocks 43 are assembled according to the tooth arrangement, are formed.

At this time, the tooth-fixing blocks 43 have an assembly structure of the first half body 431 assembled on the outside of the dentition and the second half body 432 assembled on the inside of the dentition. At this time, individual teeth are located between the first half body 431 and the second half body 432. At this time, the first half body 431 and the second half body 432 form the internal space 433 filled with conductive gel.

In addition, the gum portion 45 has a configuration including the gum body 451 having a "U"-shaped curvature according to tooth arrangement, the bottom portion 452 connecting the inner space of the gum body 451, and the block assembly guide groove 453 is penetrated along a "U"-shaped curvature so that the tooth-fixing blocks 43 are assembled according to tooth arrangement.

At this time, hooks 431a and 432a protruding outward may be formed on each of the first half body 431 and the second half body 432 of the tooth-fixing blocks 43, and a detachable groove 456 to which the hooks 431a and 432a are detachable coupled may be formed in the block assembly guide groove 453 of the gum portion 45.

At this time, the detachable groove 456 is formed at a position opposite to the hooks 431a and 432a.

In addition, the hooks 431a and 432a and the detachable groove 456 may be formed as a linear structure extending in the transverse direction.

In addition, the hooks 431a and 432a may be formed in the lower portion of the first half body 431 and the second half body 432, extension wings 431b and 432b that extend to the lower portion of the hooks 431a and 432a and operate to link the elastic deformation of the hooks 431a and 432a may be formed integrally, and separation spaces 431c and 432c may be formed inside the extension wings 431b and 432b. With this configuration, deformation in the extension wings 431b and 432b and the hooks 431a and 432a may be accommodated.

At this time, the mounting protrusion 438 that is fitted to the gum portion 45 may be further formed on the lower inner surface of the second half body 432, and the mounting grooves 454 that engage the mounting protrusion 438 may be formed on the inner edge of the block assembly guide groove 453.

The mounting grooves 454 that engage with the mounting protrusion 438 of the tooth-fixing blocks 43 are formed on the inner edge of the block assembly guide groove 453 formed in the gum portion 45. With this configuration, the mounting protrusion 438 of the tooth-fixing blocks 43 is seated in the mounting grooves 454 so that the tooth-fixing blocks 43 are prevented from moving up and down by the coupling structure of the gum portion 45. When a pair of facing extension wings 431b and 432b are simultaneously retracted in the inner direction to separate the tooth-fixing blocks 43 from the gum portion 45, a pair of hooks 431a and 432a come out of the detachable groove 456 on the gum portion 45 side, so that the coupling structure may be easily released.

As described above, the present disclosure may have an effect of providing a dentiform for practicing dental procedures that enables identification of a dental nerve structure through practice and allows mastery of nerve treatment skills such as dental nerve removal surgery by forming an individual tooth consisting of a tooth head and a tooth root, forming coupling guide projections on the outer surface of the tooth root to prevent separation when coupled with tooth-fixing blocks and to guide a coupling direction, and forming a dental nerve in the same shape as an real dental nerve inside the tooth root.

In addition, the present disclosure may have an effect of providing a dentiform for practicing dental procedures that uses tooth-fixing blocks to stably fix individual teeth with formed tooth roots without shaking according to tooth arrangement and is easy to use and enables recycling of remaining accessories by separating, from the fixing block, only individual teeth that need to be replaced after practice and replacing the individual teeth.

In addition, the present disclosure may have an effect of providing a dentiform for practicing dental procedures that is capable of measuring the root canal of individual teeth in nerve treatment practice.

The present disclosure can have an effect of providing a dentiform for practicing dental procedures that enables identification of a dental nerve structure through practice and allows mastery of nerve treatment skills such as dental nerve removal surgery by forming an individual tooth consisting of a tooth head and a tooth root, forming coupling guide projections on the outer surface of the tooth root to prevent separation when coupled with tooth-fixing blocks and to guide a coupling direction, and forming a dental nerve in the same shape as an real dental nerve inside the tooth root.

In addition, the present disclosure can have an effect of providing a dentiform for practicing dental procedures that uses tooth-fixing blocks to stably fix individual teeth with formed tooth roots without shaking according to tooth arrangement and is easy to use and enables recycling of remaining accessories by separating, from the fixing block, only individual teeth that need to be replaced after practice and replacing the individual teeth.

In addition, the present disclosure can have an effect of providing a dentiform for practicing dental procedures that is capable of measuring the root canal of individual teeth in nerve treatment practice.

The present disclosure has been described with reference to an embodiment shown in the attached drawings, but the embodiment is merely illustrative, and those skilled in the art may make various modifications and equivalent modifications from the embodiment. Accordingly, the true scope of protection of the present disclosure should be determined only by the scope of the appended claims.

**[Description of Symbols]**

| | | | |
|---|---|---|---|
| 1: | UPPER JAW | 2: | LOWER JAW |
| 3: | TEMPOROMANDIBULAR JOINT PORTIONS | | |
| 4: | DENTIFORM | 41: | INDIVIDUAL TEETH |
| 411: | TOOTH HEAD | 412: | TOOTH ROOT |
| 413: | COUPLING GUIDE PROJECTIONS | | |
| 414: | DENTAL NERVE | 43: | TEETH FIXING BLOCKS |
| 431: | FIRST HALF BODY | 432: | SECOND HALF BODY |
| 433: | INTERNAL SPACE | 434: | TEETH FIXING HOLES |
| 434a: | COUPLING GUIDE GROOVES | 435: | UPPER EDGE |
| 436: | LOWER EDGE PORTIONS | 437: | PROTRUSION COUPLING |
| 438: | MOUNTING PROTRUSION | 439: | SUPPORT MEANS |
| 439a: | SUPPORT FEET GROOVES | 439b: | SUPPORT FEET INSERTION |
| 45: | GUM PORTION | 451: | GUM BODY |
| 451A: | SUPPORT PROTRUSIONS | 452: | BOTTOM PORTION |
| 453: | BLOCK ASSEMBLY GUIDE GROOVE | | |
| 454: | MOUNTING GROOVES | 47: | CHIN SUPPORT |
| 471: | EDGE BODY | 472: | ACCOMMODATION SPACE |
| 473: | BOTTOM BODY | 474: | DENTITION GUIDE GROOVE |
| 475: | FASTENING HOLES HOLE | 48a: | ROOT CANAL MEASUREMENT |
| 48b: CONDUCTOR | 48c: MEASUREMENT STICK | | |
| P: LOCKING PINS | | | |

## Claims

1. A dentiform for practicing dental procedures, comprising:
individual teeth forming tooth heads and tooth roots;
tooth-fixing blocks to which the tooth roots of the individual teeth are detachably coupled; and
a chin support to which the tooth-fixing blocks are fixed, wherein the chin support is coupled to a temporomandibular joint of an upper jaw or a lower jaw.

2. A dentiform for practicing dental procedures, comprising:
individual teeth forming tooth heads and tooth roots;
tooth-fixing blocks to which the tooth roots of the individual teeth are detachably coupled;
a gum portion where the tooth-fixing blocks are assembled according to tooth arrangement; and
a chin support to which the gum portion and the tooth-fixing blocks are fixed, wherein the chin support is coupled to a temporomandibular joint of an upper jaw or a lower jaw.

3. The dentiform according to claim 1 or 2, wherein, on outer surfaces of the tooth roots of the individual teeth, coupling guide projections are formed to prevent separation when coupled to the tooth-fixing blocks and to guide a coupling direction.

4. The dentiform according to claim 1 or 2, wherein an internal space is formed inside the tooth-fixing block, and an extra space is formed between the tooth root and an inner surface of the internal space.

5. The dentiform according to claim 4, wherein the internal space of the tooth-fixing block is filled with conductive gel for root canal measurement.

6. The dentiform according to claim 1 or 2, wherein the tooth-fixing block consists of a first half body assembled on an outside of a dentition and a second half body assembled on an inside of the dentition with individual teeth therebetween, the first half body and the second half body form an internal space filled with the conductive gel, teeth fixing holes that surround and secure outer surfaces of the individual teeth are formed at an upper edge of the internal space, and protrusion coupling portions are formed at upper and lower edges of the internal space to allow male and female coupling between the first half body and the second half body.

7. The dentiform according to claim 6, wherein, on an inside of the teeth fixing holes, coupling guide grooves into which the coupling guide projections formed on the individual teeth are aligned are formed.

8. The dentiform according to claim 6, wherein a planar shape of the tooth-fixing block is formed into a fan shape with an angle gradually widening from an inner direction to an outer direction of the dentition.

9. The dentiform according to claim 6, wherein a mounting protrusion that is fitted into the gum portion is further formed on a lower inner surface of the second half body.

10. The dentiform according to claim 2, wherein the gum portion consists of a gum body having a "U"-shaped curvature according to tooth arrangement, a bottom portion connecting an inner space of the gum body, and a block assembly guide groove that guides the tooth-fixing blocks to be assembled according to the tooth arrangement.

11. The dentiform according to claim 10, wherein a mounting groove that engages the mounting protrusion of the tooth-fixing block is formed on an inner edge of the block assembly guide groove.

12. The dentiform according to claim 2, wherein the chin support consists of an edge body forming an outline identical to that of the gum portion, an accommodation space formed to accommodate the gum portion in an inner space of the edge body, and a bottom body that forms a bottom of the edge body.

13. The dentiform according to claim 12, wherein, on the bottom body, a lower portion of the tooth-fixing block and a lower portion of the mounting protrusion are aligned to form a dentition guide groove that maintains dentition.

14. The dentiform according to claim 12, wherein a plurality of fastening holes are formed in the bottom body, and bolts are fastened in a vertical direction from an outside to an inside of the bottom body through the fastening holes to ensure that the gum portion and the tooth-fixing blocks are fixed to the chin support.

15. The dentiform according to claim 12, wherein, by fastening locking pins in a horizontal direction from an outside to an inside of the gum portion, the gum portion and the tooth-fixing blocks are sequentially penetrated and fixed with the locking pins,
wherein one locking pin is fastened to each of the tooth-fixing blocks.
